# FASCICULE DE BREVET EUROPEEN

(11) **EP 3 328 549 B1**
(45) Date de publication et mention de la délivrance du brevet: **25.09.2019**
(21) Numéro de dépôt: 16750678.1
(22) Date de dépôt: 28.07.2016
(51) Int. Cl.: B03C 3/02, B03C 3/06, B03C 3/12, B03C 3/36, B03C 3/41, B03C 3/49

(54) **METHODE D'EPURATION SELECTIVE D'AEROSOLS**
VERFAHREN ZUR SELEKTIVEN REINIGUNG VON AEROSOLEN
METHOD FOR THE SELECTIVE PURIFICATION OF AEROSOLS

(30) Priorité: 28.07.2015 FR 1557224
(43) Date de publication de la demande: 06.06.2018
(73) Titulaire: Commissariat à l'Énergie Atomique et aux Énergies Alternatives, 75015 Paris (FR)
(72) Inventeur: POURPRIX, Michel, 91310 Montlhery (FR); BROUARD, Christophe, 38000 Grenoble (FR); CLAVAGUERA, Simon, 38000 Grenoble (FR)
(74) Mandataire: Nony
(86) Numéro de dépôt international: PCT/EP2016/068002
(87) Numéro de publication internationale: WO 2017/017185

(56) Documents cités:
- EP-A1- 0 008 967
- EP-A1- 2 131 017
- DE-A1- 3 324 803
- DE-A1- 19 650 585
- US-A1- 2013 036 906
- BISKOS G ET AL: "Electrostatic characterisation of corona-wire aerosol chargers", JOURNAL OF ELECTROSTATICS, ELSEVIER SCIENCE PUBLISHERS B.V. AMSTERDAM, NL, vol. 63, no. 1, 1 janvier 2005 (2005-01-01), pages 69-82, XP027652716, ISSN: 0304-3886 [extrait le 2005-01-01]
- Céline Montsanglant-Louvet ET AL: "250 Rapport scientifique et technique 2008 -IRSN", Rapport scientifique et technique 2008, 31 décembre 2008 (2008-12-31), pages 250-259, XP055279552, Extrait de l'Internet: URL:http://www.irsn.fr/FR/Larecherche/publ ications-documentation/aktis-lettre-dossie rs-thematiques/RST/RST-2008/Documents/CHO5 -1-Perf-contamination-atmos.pdf [extrait le 2016-06-10]

## Description

### Domaine technique

La présente invention concerne le domaine d'épuration d'aérosol, susceptible de contenir des particules en suspension.

La présente invention vise à améliorer les méthodes d'épuration d'aérosol par précipitation électrostatique afin de permettre une collecte des particules en suspension dans les aérosols qui soit simultanée mais sélective en fonction de leurs dimensions, la sélectivité visant de préférence, à collecter en les séparant, les particules de dimension micronique et les particules de dimension nanométrique.

Par « nanoparticule », on entend, la définition usuelle selon la norme ISO TS/27687 : un nano-objet dont les trois dimensions sont à l'échelle nanométrique, c'est-à-dire une particule dont le diamètre nominal est inférieur à 100 nm environ.

### Etat de la technique

Depuis les années 1970, la prise de conscience des effets environnementaux et sanitaires engendrés par les aérosols a été à l'origine de développements technologiques nouveaux afin de mieux évaluer les risques associés.

Le domaine s'est rapidement étendu dans les années 1980 pour inclure l'utilisation des aérosols dans des procédés de production à haute technologie, et la maîtrise de la contamination par les aérosols dans les atmosphères ultra-propres.

A partir des années 1990, les recherches se sont intensifiées sur les propriétés des particules ultrafines, i.e. celles de dimension inférieure à 100 nm, et sur l'effet des aérosols sur le climat. Le domaine est donc très large puisqu'il couvre à la fois le champ de l'hygiène industrielle, du contrôle de la pollution de l'air, de la toxicologie par inhalation, de la physique et de la chimie de l'atmosphère, et de la contamination par des aérosols radioactifs dans les installations ou dans l'environnement.

Plus récemment, l'essor rapide des nanotechnologies dans divers domaines tels que la santé, la microélectronique, les technologies de l'énergie ou les produits de consommation courante tels que peintures et cosmétiques, rend indispensable la poursuite de travaux sur les impacts sanitaires et environnementaux de ces nouveaux matériaux afin de s'entourer des conditions de sécurité optimales.

Il est donc nécessaire de mettre au point des méthodes et des outils d'évaluation de l'exposition aux particules - et notamment aux nanoparticules - des travailleurs, des consommateurs et de l'environnement.

Le développement de méthodes et de dispositifs d'échantillonnage et d'analyse d'aérosols dans une large gamme granulométrique jusqu'aux tailles nanométriques est ainsi un enjeu crucial en termes de santé publique et de prévention des risques associés.

En particulier, le développement de dispositifs de prélèvement adapté pour être portatif et être fixé à l'unité à une combinaison de travail d'un travailleur en poste de fabrication de nano-objets, d'élaboration de nanomatériaux ou d'utilisation de ces derniers pourrait s'avérer impératif.

Pour prélever et collecter des particules en suspension dans des aérosols, en vue de leur analyse in situ ou en laboratoire, de nombreux dispositifs existent. Ils peuvent mettre en oeuvre une collecte par filtration sur fibres ou sur membranes poreuses, une collecte par diffusion pour les particules les plus fines, une collecte sous l'effet d'un champ de forces d'inertie (impacteurs, cyclones, centrifugeuses) ou de pesanteur (chambres de sédimentation, élutriateurs) pour les particules plus grosses, ou encore une collecte sous l'effet d'un champ de forces électriques, thermiques ou radiatives.

Parmi ces dispositifs, ceux électrostatiques, c'est-à-dire dont le principe de fonctionnement repose sur la mise en oeuvre d'un champ électrique, en particulier d'un champ électrique intense pour créer un effet de décharge couronne (en anglais « *corona discharge* ») sont couramment utilisés.

Lorsqu'on génère un champ électrique intense dans un volume où des particules d'aérosol sont présentes, ces dernières peuvent se charger électriquement selon deux mécanismes de charge distincts et cela peut se produire concomitamment.

La publication [1], en particulier la figure 15.4 de la page 330 de cet ouvrage, montre que le mécanisme de charge électrique par diffusion d'ions unipolaires, associé au mécanisme de charge électrique par champ, est applicable à une large gamme de tailles de particules, à minima pour les particules de dimensions comprises entre 0,01 à 10 µm. Il ressort également que le mécanisme de charge électrique par diffusion d'ions unipolaires est surtout prépondérant pour les particules les plus fines, typiquement les nanoparticules, c'est-à-dire celles de dimensions inférieures à 100 nm. A contrario, le mécanisme de charge par champ est plus efficace pour les grosses particules, c'est-à-dire les particules de dimension micronique et submicronique (≥300 nm).

A titre d'exemple, si l'on considère la mobilité électrique d'une particule, notée Z, de l'ordre de 1 cm²/st.V.s en unité électrostatique CGS, soit 3,3x10⁻⁷ m²/V.s en unité SI, alors cette particule placée entre deux plaques planes et parallèles qui génèrent un champ électrique E de 10⁵ V/m, acquiert une vitesse W égale au produit Z^{∗}E, soit W de l'ordre de 0,033 m/s. Il est clairement démontré que la force électrostatique engendre des vitesses largement supérieures aux autres champs de forces subies par une particule, que sont les champs de la gravité, inertiels, thermiques et radiatifs. Cet avantage est mis à profit dans le fonctionnement des épurateurs électrostatiques du commerce, où les processus de charge par diffusion et de charge par champ peuvent agir conjointement.

Charger électriquement des particules d'aérosol nécessite la présence d'ions unipolaires en forte concentration. La méthode de loin la plus efficace pour créer ces ions, dans l'air atmosphérique, est la décharge couronne.

Pour produire une décharge couronne, on doit établir un champ électrostatique dans une géométrie qui permet de le rendre non uniforme. Plus exactement, ce champ électrique élevé (plusieurs milliers à dizaines de milliers de volts par centimètre au voisinage de l'électrode de décharge) est induit par deux électrodes disposées à proximité l'une de l'autre: une première électrode polarisée ou électrode de décharge, généralement en forme de fil ou de pointe, étant disposée en regard d'une deuxième électrode, cette dernière se présentant sous la forme d'une contre-électrode, généralement de géométrie plane ou cylindrique. Le champ électrique existant entre les deux électrodes ionise le volume de gaz situé dans l'espace inter-électrodes, et notamment une gaine ou couronne de gaz ionisé située autour de l'électrode de décharge. Les charges créées, en migrant vers la contre-électrode, chargent les particules à séparer contenues dans le gaz. Les particules chargées ainsi créées migrent alors vers la contre-électrode, sur laquelle elles peuvent être collectées. Cette contre-électrode est usuellement appelée électrode de collecte. Du fait du niveau du champ électrique requis, il est nécessaire d'utiliser une électrode de décharge qui a un (très) faible rayon de courbure. Les électrodes de décharge rencontrées sont donc généralement soit des pointes fines soit des fils de faible diamètre. Ainsi, par un processus qui a pour origine les électrons et les ions créés par l'irradiation naturelle, les électrons sont accélérés dans le champ électrique intense créé au voisinage de l'électrode à (très) faible rayon de courbure. Par la haute tension imposée, si ce champ dépasse une valeur critique, un effet d'avalanche provoque l'ionisation de l'air dans cet espace. Ce phénomène est appelé décharge couronne.

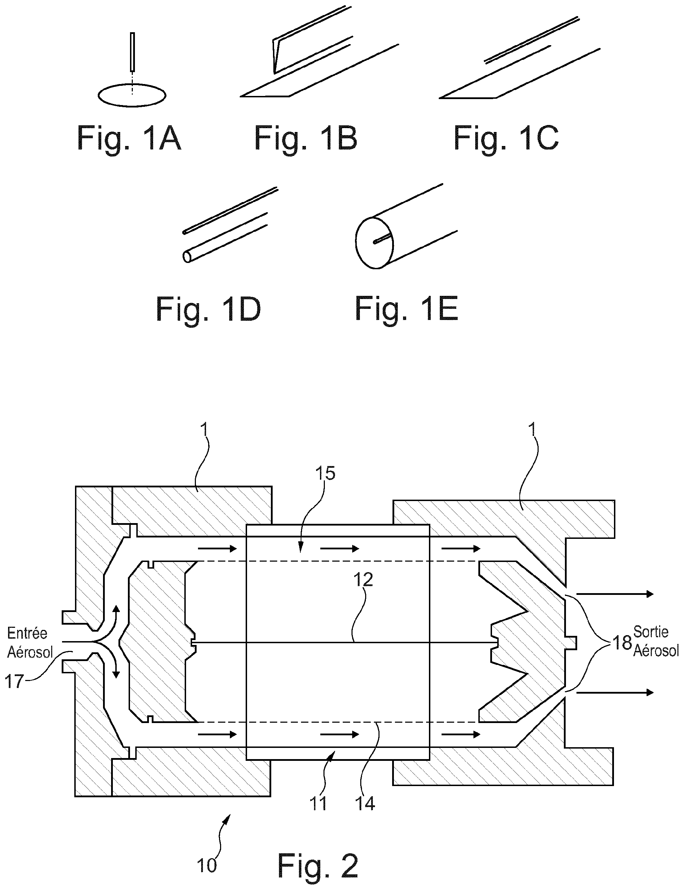

A titre d'exemple, on a représenté aux figures 1A à 1E quelques configurations d'électrodes les plus adaptées pour obtenir une décharge couronne, à savoir respectivement un agencement pointe-plan (figure 1A), lame-plan (figure 1B), fil-plan (figure 1C), fil-fil (figure 1D), fil-cylindre (figure 1E).

Par exemple en configuration pointe-plan, si la pointe est positive par rapport au plan, les électrons se déplacent rapidement vers la pointe alors que les ions positifs se déplacent vers le plan, créant alors un espace unipolaire positif. Par ailleurs, un vent d'ions, aussi appelé vent ionique, s'établit, caractérisé par un écoulement d'air dirigé de la pointe vers le plan, ayant pour origine les chocs des ions positifs avec les molécules neutres environnantes.

A l'inverse, si la pointe est négative par rapport au plan, les ions positifs se déplacent vers la pointe, et les électrons se déplacent vers le plan en se fixant aux molécules d'air pour former des ions négatifs. Dans tous les cas, même si le processus de création d'ions positifs ou négatifs n'est pas exactement symétrique, les ions unipolaires migrent de la pointe vers le plan avec une grande concentration de l'ordre de 10⁶ à 10⁹/cm³ et, quelle que soit la polarité, il apparaît un vent électrique dirigé de la pointe vers le plan.

Ainsi, l'introduction de particules d'aérosol dans l'espace pointe-plan permet de les charger de la même polarité que la pointe, selon un processus de charge par champ. En outre, le champ utilisé pour créer l'effet couronne et le vent électrique participent aussi au processus de charge par champ.

Pour les autres configurations montrées aux figures 1B à 1E, les processus de production d'ions et de charge par champ des particules sont en tous points similaires.

C'est sur ce principe que fonctionnent certains précipitateurs électrostatiques commercialisés qui sont utilisés pour prélever et collecter des particules sur un support permettant l'analyse.

Par exemple, la figure 15.9 de la page 341 de la publication [1] déjà citée montre un agencement permettant le dépôt de particules d'aérosol sur une grille de microscope électronique, les particules étant chargées et précipitées dans une configuration pointe-plan.

Un autre exemple est illustré en figure 10.10 de la page 223 de cette même publication [1] et met en oeuvre la technique de charge et de précipitation en géométrie pointe-plan pour collecter des particules d'aérosol sur un cristal piézoélectrique.

Comme déjà mentionné, le mécanisme de charge par diffusion d'ions unipolaires s'applique de manière prépondérante sur les particules les plus fines. Ce mécanisme est de plus en plus mis en oeuvre dans la métrologie des nanoparticules, notamment pour déterminer leur granulométrie. En effet, beaucoup d'auteurs ont étudié et étudient encore des dispositifs capables de conférer des mobilités électriques élevées aux particules les plus fines, afin de pouvoir les sélectionner dans des instruments adaptés à ce nouveau domaine. On peut citer ici notamment l'article [2] qui fait l'inventaire de la plupart des technologies mises au point à ce jour, ou encore le principe développé par l'auteur de la publication [3], qui utilise une configuration fil-cylindre, très étudiée plus récemment comme indiqué dans la publication [4], mais également avant (publication [5]).

On a reproduit schématiquement en figure 2, un dispositif de charge, aussi appelé chargeur, à diffusion d'ions unipolaires dont la géométrie est de type fil-cylindre, tel qu'illustré dans la publication [4]. Le chargeur 10 comprend un corps à symétrie de révolution 1 en deux parties qui maintiennent un cylindre métallique creux 11 formant une électrode extérieure reliée à une alimentation sous courant alternatif et un fil métallique central 12 agencé selon l'axe du corps et relié à une alimentation haute tension non représentée. Autour du fil central 12 est également agencée de manière annulaire une grille cylindrique 14 formant une électrode intérieure. L'aérosol contenant les particules à charger circule dans le chargeur 10 depuis l'orifice d'entrée 17 jusqu'à l'orifice de sortie 18 en passant dans l'espace 15 délimité entre l'électrode intérieure 14 formée par la grille et l'électrode extérieure 11 formée par le cylindre.

Le fonctionnement de ce chargeur 10 est le suivant : des ions sont produits par effet couronne au niveau du fil central 12 et sont collectés par l'électrode intérieure grillagée 14 portée à un faible potentiel, typiquement à la masse. Une partie de ces ions sort de cette grille 14 pour aller vers la surface interne du cylindre périphérique 11 du fait de la tension appliquée sur ce dernier. Les particules d'aérosol transitent dans l'espace 15 entre grille 14 et cylindre 11 et sont donc chargées par diffusion par les ions unipolaires sortis de la grille 14. Le mécanisme de charge par diffusion s'opère en fonction du produit N^{∗}t, où N représente la concentration en ions unipolaires et t le temps de séjour des particules. Le mécanisme de charge par diffusion est le seul à pouvoir se produire car il ne peut y avoir de mécanisme de charge par champ puisque le champ électrique est très faible dans l'espace 15.

Il est intéressant de noter que le processus de charge des aérosols par diffusion d'ions unipolaires permet de conférer un nombre de charges électriques donné à une particule de taille donnée.

Ce principe est d'ailleurs mis en oeuvre dans les analyseurs différentiels de mobilité électrique (DMA) qui sont des instruments capables de fournir la distribution granulométrique de particules fines par comptage de la concentration en particules dans une classe de mobilité électrique donnée. Un tel dispositif est par exemple mis en oeuvre dans le brevet US 8044350 B2.

La demande de brevet DE19650585 divulgue un chargeur présentant à la fois les caractéristiques d'un chargeur à effet de champ et d'un chargeur à diffusion d'ions unipolaires. Ce type de chargeur participe à la charge de tout type de particules quelle que soit leur taille.

Il ressort de l'étude de l'état de l'art qu'il n'a pas été proposé de dispositif permettant à la fois de collecter simultanément des particules présentes dans un aérosol et qui sont de dimensions différentes dans une large gamme, typiquement entre quelques nanomètres et quelques dizaines de micromètres, et de les séparer selon des gammes de dimensions restreintes, de préférence séparer les nanoparticules des particules de taille micronique.

Or, il existe un besoin pour une telle méthode, notamment afin d'éliminer les particules fines pour ne garder que les grosses. Une application concrète porte sur la mesure de la contamination atmosphérique par des aérosols radioactifs.

Le but général de l'invention est alors de répondre au moins en partie à ce besoin.

### Exposé de l'invention :

Pour ce faire, l'invention a tout d'abord pour objet une méthode de collecte de particules susceptibles d'être présentes dans un aérosol, comprenant les étapes suivantes:
- aspiration de l'aérosol dans un conduit, de préférence cylindrique, depuis son orifice d'entrée,
- charge des particules les plus fines, en aval de l'orifice d'entrée, par diffusion d'ions unipolaires dans un espace entre une électrode sous la forme d'une grille entourant une électrode sous la forme d'un fil, et une première portion conductrice de paroi intérieure du conduit,
- génération d'un champ électrique sans effet couronne dans l'espace entre une électrode et une deuxième portion conductrice de paroi intérieure du conduit, afin de collecter par dépôt sur un premier substrat de collecte (Zn) des particules les plus fines chargées par le chargeur à diffusion,
- génération d'un champ électrique avec effet couronne dans l'espace entre le fil ou la pointe d'une électrode et une troisième portion conductrice de la paroi intérieure du conduit, afin de collecter par dépôt sur un deuxième substrat de collecte (Zm) distinct du premier substrat de collecte, les particules les plus grosses, non chargées par le chargeur à diffusion,
- extraction de l'air épuré de l'orifice de sortie du conduit.

La méthode peut comprendre en outre au moins une étape de recyclage ou de valorisation des particules les plus fines collectées sur le premier substrat et/ou des particules les plus grosses collectées sur le deuxième substrat.

Ainsi, l'invention consiste en une collecte électrostatique de l'ensemble des particules présentes dans un aérosol, mais avec un découplage des mécanismes d'une part de charge des particules par diffusion d'ions unipolaires pour charger puis collecter les particules les plus fines, et d'autre part de charge par champ électrique avec effet couronne pour charger et collecter les particules les plus grosses sur un substrat différente du substrat de collecte des particules les plus fines.

Autrement dit, l'invention consiste à charger électriquement tout d'abord les fines particules par diffusion d'ions unipolaires, puis à charger ensuite les grosses particules par champ électrique et à collecter chaque groupe de particules ainsi chargées en fonction de leur dimension sur un support adéquat.

Ainsi, l'invention permet de façon judicieuse de classer les particules selon leur granulométrie en les déposant dans des zones physiquement distinctes.

Pour des applications particulières, la méthode selon l'invention permet de séparer la fraction la plus fine des particules tout en laissant passer la fraction la plus grosse. L'application à la détection précoce d'incidents par mesure de la contamination atmosphérique par des aérosols radioactifs dans certains ateliers est proposée.

Une alternative est la collecte des particules de matière valorisable ou des matières premières stratégiques présentes sous forme particulaire dans des aérosols.

Selon une variante avantageuse de l'invention, la méthode comprend en outre les étapes suivantes :
a/ collecte de particules radioactives sur le premier et/ou le deuxième substrat de collecte pendant un temps t1 ;
b/ comptage d'impulsions générées par le courant d'ionisation de l'air dans les espaces pendant un temps t2.

### Description détaillée

D'autres avantages et caractéristiques ressortiront mieux à la lecture de la description détaillée, faite à titre illustratif et non limitatif, en référence aux figures suivantes parmi lesquelles:
- les figures 1A à 1E sont des vues schématiques de différentes configurations d'électrodes pour obtenir un effet couronne par décharge électrique;
- la figure 2 est une vue en coupe longitudinale d'un dispositif de charge, ou chargeur à diffusion d'ions unipolaires ;
- la figure 3 est une vue schématique en coupe longitudinale d'un premier exemple de dispositif de collecte de particules selon l'invention.

Dans l'ensemble de la présente demande, les termes « entrée », « sortie », « amont » et « aval » sont à comprendre par référence par rapport au sens du flux d'aspiration au travers d'un dispositif de collecte selon l'invention. Ainsi, l'orifice d'entrée désigne l'orifice du dispositif par lequel l'aérosol contenant les particules est aspiré tandis que celui de sortie désigne celui par lequel le flux d'air sort.

Les figures 1A à 1E et 2 ont déjà été commentées en préambule. Elles ne sont pas détaillées ci-après.

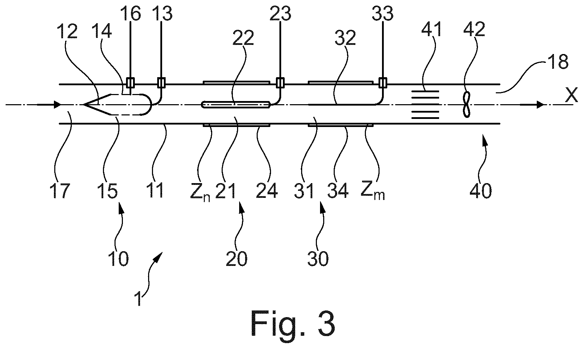

On a représenté en figure 3 un exemple de dispositif électrostatique selon l'invention 1 pour l'épuration sélective d'un aérosol susceptible de contenir des particules.

Un tel dispositif selon l'invention permet d'épurer l'aérosol en collectant à la fois les particules les plus fines, telles que les nanoparticules et les particules les plus grosses, comme celles de taille micronique tout en les séparant l'une de l'autre selon leur gamme de taille.

Le dispositif d'épuration 1 comprend tout d'abord un conduit 11 qui est un cylindre creux de révolution autour de l'axe longitudinal X et qui est électriquement relié au potentiel zéro.

Le dispositif de collecte 1 comprend à l'intérieur du conduit 11, d'amont en aval, entre son orifice d'entrée 17 et son orifice de sortie 18, quatre étages distincts 10, 20, 30, 40.

Le premier étage est constitué d'un chargeur à diffusion d'ions unipolaires 10, et est similaire à celui décrit précédemment en relation avec la figure 2.

Le chargeur 10 comprend ainsi une électrode centrale qui s'étend selon l'axe X sous la forme d'un fil 12 relié à une alimentation délivrant une haute tension 13, adaptée pour créer ainsi une décharge couronne au voisinage du fil 12.

Il comprend également une électrode périphérique sous la forme d'une grille 14 reliée à une alimentation basse tension 16.

L'étage 20, en aval du chargeur 10, comprend une électrode centrale qui s'étend selon l'axe X sous la forme d'une tige 22 reliée à une alimentation délivrant une moyenne tension 23, adaptée pour créer sans effet couronne un champ électrique de collecte dans l'espace 21 séparant l'électrode centrale 22 et la paroi du conduit 11. Un cylindre creux 24 épousant la paroi du conduit et constituant un premier substrat de collecte Zn est agencé autour de la tige 22 en regard de celle-ci.

L'étage 30, en aval de l'étage 20, comprend une électrode centrale qui s'étend selon l'axe X sous la forme d'un fil 32 relié à une alimentation haute tension 33, adapté pour créer un effet couronne au voisinage du fil 32 et donc un champ électrique intense dans l'espace 31 séparant le fil central 32 du conduit 11. Un cylindre creux 34 épousant la paroi du conduit et constituant un deuxième substrat de collecte Zm est agencé autour du fil 32 en regard de celui-ci.

L'étage 40 comprend une structure 41, par exemple en « nid d'abeille », adaptée pour éviter l'apparition d'un vortex dans le conduit 11, et en aval un dispositif d'aspiration 42. En fonction des configurations, le dispositif de collecte selon l'invention peut s'affranchir de la structure 41.

Le fonctionnement du dispositif de collecte qui vient d'être décrit en référence à la figure 3 est le suivant.

L'air contenant les particules à collecter est aspiré par l'orifice d'entrée 17 par l'action du dispositif d'aspiration 42.

Les plus fines particules de l'aérosol sont électriquement chargées par diffusion d'ions unipolaires dans l'espace 15 séparant la grille 14 du conduit 11.

Ces particules les plus fines, à grande mobilité électrique, et les autres particules plus grosses à plus faible mobilité électrique, pénètrent dans l'étage 20.

Le champ électrique sans effet couronne créé dans l'espace 21 entre la tige 22 et le cylindre 24 assure la collecte des particules les plus fines sur ce dernier en définissant le premier substrat de collecte Zn.

Les autres particules, plus grosses ne sont pas collectées et, toujours présentes dans l'aérosol qui pénètre dans le troisième étage 30.

Ces particules les plus grosses sont alors chargées électriquement sous l'effet de la décharge couronne à proximité du fil 32 et du champ intense régnant dans l'espace 31 et sont collectées sur la paroi intérieure du cylindre 34 en définissant le deuxième substrat de collecte Zm.

L'air épuré à la fois des particules les plus fines déposées sur le premier substrat de collecte Zn et des particules les plus grosses Zm déposées sur le deuxième substrat de collecte Zm est ensuite évacué par l'orifice de sortie 18 du dispositif.

Chaque cylindre de collecte 24, 34 peut être extrait aisément du conduit une fois la collecte visée effectuée.

Selon l'application recherchée, chacun des substrat Zn et Zm peut ensuite être analysé par les techniques classiques de caractérisation physique ou physico-chimique, telles que microscopie optique ou électronique, scanner de surface, spectrométrie α, β, γ si les particules sont radioactives, spectroscopie de fluorescence X (XRF pour « X-Ray Fluoresence »), micro-fluorescence X (µ-XRF), spectroscopie sur plasma induit par laser (LIBS pour « Laser-Induced Breakdown Spectroscopy »)....pour connaître la granulométrie d'une part des particules les plus fines et d'autre part des particules les plus grosses, leur concentration, leur composition chimique et/ou leur morphologie.

Une application particulière porte sur la détection de présence de particules radioactives sur les substrats de collecte sans qu'il soit nécessaire de les extraire.

En effet, de façon séquentielle, après une phase de collecte pendant un temps t1, le dispositif comme illustré figure 3 permet de faire fonctionner les étages 20 et 30 en tant que chambre d'ionisation pendant un temps t2.

Par un dispositif électronique approprié, mais classique en instrumentation nucléaire, la mesure du courant d'ionisation dans chaque étage 20 et 30 permet de détecter la présence de particules radioactives avec un intérêt double:
- détection précoce d'incident dans une installation nucléaire par un suivi de la contamination atmosphérique de l'air des locaux,
- séparation des radionucléides en deux fractions de tailles distinctes : les plus fines particules dans l'espace 20, les plus grosses dans l'espace 30.

Ce dernier point a une importance majeure. En effet, il est souvent nécessaire de séparer, d'une part les particules d'aérosol que l'on veut détecter (tels que les particules de plutonium dans les ateliers où la dimension des aérosols est de l'ordre de 5 µm (diamètre médian aérodynamique)), d'autre part l'aérosol naturel porteur des descendants du radon (aérosol beaucoup plus fin) qui constitue un bruit de fond indésirable. Ce bruit de fond naturel peut masquer la mesure des traces de radionucléides recherchés.

L'intérêt d'une telle séparation est bien décrit dans l'ouvrage en référence [6] page 647 au paragraphe intitulé « *Mitigation of Interference from Radon Progeny* », et dans l'article [7].

D'autres variantes et améliorations peuvent être apportées sans pour autant sortir du cadre de l'invention qui est définie par les revendications ci-dessous, notamment pour d'autres applications où l'intérêt de séparer un aérosol en deux classes granulométriques distinctes est recherché, en particulier pour valoriser des particules les plus fines collectées sur le premier substrat et/ou des particules les plus grosses sur le deuxième substrat.

L'invention n'est pas limitée aux exemples qui viennent d'être décrits; on peut notamment combiner entre elles des caractéristiques des exemples illustrés au sein de variantes non illustrées.

### Références citées

[1]: W. Hinds, « Aerosol Technology » , 2nd Edition, 1999*.*
[2]: P. Intra et N. Tippayawong, « Aerosol an Air Quality Research », 11 : 187-209, 2011 ;
[3]: G.W. Hewitt, « The Charging of small Particles for Electrostatic Precipitation », AIEE Trans., 76 : 300-306, 1957 ;
[4]: G. Biskos, K. Reavell, N. Collings, « Electrostatic Characteriation of Corona-Wire Aerosol Chargers », J. Electrostat. 63 : 69-82, 2005;
[5]: D.Y.H. Pui, S. Fruin, P.H. McMurry, « Unipolar Diffusion Charging of Ultrafine Aerosols », Aerosol Sciences Technology 8 : 173-187, 1988 ;
[6]: P. Kulkarni, P. A. Baron, K. Willeke, « Aerosol Measurement », 3rd Edition, 2011*.*
[7] : C. Monsanglant-Louvet, F. Gensdarmes, N. Liatimi, S. Pontreau « Evaluation des performances des moniteurs de contamination atmosphérique en conditions réelles de fonctionnement », Rapport scientifique et technique, IRSN : 251-259, 2008.

## Revendications

1. Méthode d'épuration sélective d'aérosol comprenant les étapes suivantes:
- aspiration (18, 42) de l'aérosol dans un conduit, de préférence cylindrique (11) depuis son orifice d'entrée (17),
- charge des particules les plus fines, en aval de l'orifice d'entrée, par diffusion d'ions unipolaires (10) dans un espace (15) entre une électrode sous la forme d'une grille (14) entourant une électrode sous la forme d'un fil (12), et une première portion conductrice de paroi intérieure du conduit,
- génération d'un champ électrique sans effet couronne dans l'espace (21) entre une électrode (22) et une deuxième portion conductrice (24) de paroi intérieure du conduit, afin de collecter par dépôt sur un premier substrat de collecte de collecte (Zn) des particules les plus fines chargées par le chargeur à diffusion,
- génération d'un champ électrique avec effet couronne dans l'espace (31) entre le fil ou la pointe d'une électrode (32) et une troisième portion conductrice (34, 6) de la paroi intérieure du conduit, afin de collecter par dépôt sur un deuxième substrat de collecte (Zm) distinct du premier substrat de collecte, les particules les plus grosses, non chargées par le chargeur à diffusion,
- extraction de l'air épuré de l'orifice de sortie (18) du conduit.

2. Méthode d'épuration selon la revendication 1, comprenant en outre au moins une étape de recyclage ou de valorisation des particules les plus fines collectées sur le premier substrat et/ou des particules les plus grosses collectées sur le deuxième substrat.

3. Méthode d'épuration selon la revendication 1 ou 2, comprenant en outre les étapes suivantes :
a/ collecte de particules radioactives sur le premier et/ou le deuxième substrat de collecte pendant un temps t1 ;
b/ comptage d'impulsions générées par le courant d'ionisation de l'air dans les espaces (21, 31) pendant un temps t2.

## Patentansprüche

1. Verfahren zur selektiven Reinigung eines Aerosols mit den folgenden Schritten:
- Ansaugen (18, 42) des Aerosols in eine vorzugsweise zylindrische Leitung (11) von ihrer Eintrittsöffnung (17),
- Laden von feinsten Partikeln stromabwärts der Eintrittsöffnung durch Diffusion (10) von unipolaren Ionen in einem Raum (15) zwischen einer Elektrode in Form eines Gitters (14), die eine Elektrode (12) in Form eines Drahts (12) umgibt, und einem ersten leitenden Abschnitt einer Innenwand der Leitung,
- Erzeugen eines elektrischen Felds ohne Koronaentladung in dem Raum (21) zwischen einer Elektrode (22) und einem zweiten leitenden Abschnitt (24) einer Innenwand der Leitung, um durch den Diffusionslader geladene feinste Partikel durch Ablagerung auf einem ersten Sammelsubstrat (Zn) zu sammeln,
- Erzeugen eines elektrischen Felds mit Koronaentladung in dem Raum (31) zwischen dem Draht oder der Spitze einer Elektrode (32) und einem dritten leitenden Abschnitt (34, 6) der Innenwand der Leitung, um die gröbsten Partikel, die nicht durch den Diffusionslader geladen sind, durch Ablagerung auf einem zweiten Sammelsubstrat (Zm), das von dem ersten Sammelsubstrat verschieden ist, zu sammeln,
- Absaugen der gereinigten Luft aus der Austrittsöffnung (18) der Leitung.

2. Reinigungsverfahren nach Anspruch 1, ferner umfassend mindestens einen Schritt der Rückgewinnung oder Verwertung der auf dem ersten Substrat gesammelten feinsten Partikel und/oder der auf dem zweiten Substrat gesammelten gröbsten Partikel.

3. Reinigungsverfahren nach Anspruch 1 oder 2, ferner umfassend die folgenden Schritte:
a/ Sammeln von radioaktiven Partikeln auf dem ersten und/oder zweiten Sammelsubstrat während einer Zeitdauer t1;
b/ Zählen von durch den Ioninisierungsstrom der Luft in den Räumen (21, 31) erzeugten Impulsen während einer Zeitdauer t2.

## Claims

1. A method for selectively purifying an aerosol comprising the following steps:
- sucking (18, 42) the aerosol through a, preferably cylindrical, conduit (11) from its inlet orifice (17);
- charging the finest particles, downstream of the inlet orifice, by unipolar ion diffusion (10) in a space (15) between an electrode in the form of a gate (14) surrounding an electrode in the form of a wire (12), and a first conductive portion of the internal wall of the conduit;
- generating an electric field without a corona effect in the space (21) between an electrode (22) and a second conductive portion (24) of the internal wall of the conduit, in order to collect the finest particles charged by the diffusion charger by deposition onto a first collection substrate (Zn);
- generating an electric field with a corona effect in the space (31) between the wire or the point of an electrode (32) and a third conductive portion (34, 6) of the internal wall of the conduit, in order to collect the biggest particles not charged by the diffusion charger by deposition onto a second collection substrate (Zm) distinct from the first collection substrate;
- extracting purified air from the outlet orifice (18) of the conduit.

2. The purification method as claimed in claim 1, further comprising at least one step of recycling or reusing the finest particles collected on the first substrate and/or the biggest particles collected on the second substrate.

3. The purification method as claimed in claim 1 or 2, further comprising the following steps:
a/ collecting radioactive particles on the first and/or the second collection substrate during a time period t1;
b/ counting pulses generated by the ionization current of the air in the spaces (21, 31) during a time period t2.
